# EUROPEAN PATENT APPLICATION

(11) **EP 4 696 993 A1**
(43) Date of publication of application: **18.02.2026**
(21) Application number: 25193804.9
(22) Date of filing: 04.08.2025
(51) Int. Cl.: G01G 13/00

(54) **WEIGHT MEASUREMENT APPARATUS AND METHOD OF CONTROLLING THE SAME, AND PROGRAM**

(30) Priority: 16.08.2024 JP 2024137006
(71) Applicant: Yokogawa Electric Corporation, Tokyo 180-8750 (JP)
(72) Inventor: KEI, Takayuki, Musashino-shi, Tokyo, 180-8750 (JP); HASEGAWA, Yukihiko, Musashino-shi, Tokyo, 180-8750 (JP); FUJIYAMA, Keita, Musashino-shi, Tokyo, 180-8750 (JP)
(74) Representative: Stöckeler, Ferdinand

(57) **Abstract**

Powder is weighed with high accuracy by inexpensive configuration. A weight measurement apparatus for storing, in a subdivision container, material of a target weight from a raw material container includes a movable arm to which a scoop is attached, a scraper, a subdivision weight measurement instrument configured to measure the weight of material in the subdivision container, and a controller. The controller is configured to, by controlling the movable arm, scoop material up by the scoop from the raw material container, level the material off in the scoop using the scraper, and store, in the subdivision container, the material in the scoop based on the weight of the material in the subdivision container measured by the subdivision weight measurement instrument.

## Description

### CROSS-REFERENCE TO RELATED APPLICATION

This application claims priority to Japanese Patent Application No. 2024-137006 filed on August 16, 2024, the entire contents of which are incorporated herein by reference.

### TECHNICAL FIELD

The present disclosure relates to a weight measurement apparatus and a method of controlling the same, and a program.

### BACKGROUND

Patent Literatures (PTLs) 1 and 2 describe apparatuses for weighting powder using arm robots.

### CITATION LIST

### Patent Literature

PTL 1: JP 2021-39034 A
PTL 2: JP 1991-202720 A

### SUMMARY

However, conventional apparatuses have room for improvement in terms of weighing powder with high accuracy by inexpensive configuration.

The present disclosure aims to enable powder to be weighed with high accuracy by inexpensive configuration.

A weight measurement apparatus according to some embodiments is:
(1) A weight measurement apparatus for storing, in a subdivision container, material of a target weight from a raw material container, the weight measurement apparatus including:
   a movable arm to which a scoop is attached;
   a scraper;
   a subdivision weight measurement instrument configured to measure the weight of material in the subdivision container; and
   a controller,
   wherein the controller is configured to, by controlling the movable arm:
      scoop material up by the scoop from the raw material container; level the material off in the scoop using the scraper; and
      store, in the subdivision container, the material in the scoop based on the weight of the material in the subdivision container measured by the subdivision weight measurement instrument.

As described above, the weight measurement apparatus scoops the material up by the scoop from the raw material container, levels the material off in the scoop using the scraper, and then stores, in the subdivision container, the material in the scoop based on the weight of material in the subdivision container measured by the subdivision weight measurement instrument. Therefore, it is possible to weigh the material with high accuracy by the inexpensive configuration having the only one movable arm.

In one embodiment,
(2) The weight measurement apparatus according to (1) may include, as the scraper, a first scraper provided above the raw material container, and a second scraper provided above the subdivision container,
wherein the controller may be configured to, by controlling the movable arm:
   using the first scraper, level the material off in the scoop that has scooped the material up from the raw material container, and
   using the second scraper, store, in the subdivision container, the material in the scoop based on the weight of the material in the subdivision container measured by the subdivision weight measurement instrument.

As described above, since the material is leveled off in the scoop that has scooped the material up from the raw material container, using the first scraper provided above the the raw material container, it is possible to prevent the material from falling during conveyance of the material, and stabilize the amount of material to be conveyed by the scoop. Since the material in the scoop is stored in the subdivision container, using the second scraper provided above the subdivision container, based on the weight of the material in the subdivision container measured by the subdivision weight measurement instrument, it is possible to weigh the material with high accuracy.

In one embodiment,
(3) In the weight measurement apparatus according to (2), the first scraper may be wider in shape than the scoop.

Such a configuration makes it possible to stabilize the amount of material remaining in the scoop when the material is leveled off, using the first scraper, in the scoop that has scooped the material up from the raw material container.

In one embodiment,
(4) In the weight measurement apparatus according to (2) or (3), the second scraper may be in a shape fitting into the scoop.

Such a configuration makes it possible to transfer a desired amount of material from the scoop, on which the material is loaded, to the subdivision container with high accuracy.

In one embodiment,
(5) The weight measurement apparatus according to any one of (1) to (4) may further include a raw material weight measurement instrument configured to measure the weight of material in the raw material container,
wherein the controller may be configured to, by controlling the movable arm:
   calculate the weight of the material in the scoop, based on the weight of the material in the raw material container measured by the raw material weight measurement instrument before and after scooping the material up by the scoop from the raw material container; and
   store, in the subdivision container, the material in the scoop based on the calculated weight of the material in the scoop.

As described above, since the material in the scoop is stored in the subdivision container based on the weight of the material in the scoop, it is possible to weigh the material with high accuracy.

In one embodiment,
(6) In the weight measurement apparatus according to any one of (1) to (5), the controller may be configured to:
acquire the distribution of the height of material remaining in the raw material container; and
determine, based on the acquired distribution of the height of the material, a position at which the material is scooped up by the scoop, in the raw material container.

Such a configuration makes it possible to uniformly scoop material up from the raw material container, and to prevent an operation of scooping material up by positioning the scoop to a place at which no material is present.

In one embodiment,
(7) The weight measurement apparatus according to (1) may further include a movement device configured to move the scraper between above the raw material container and above the subdivision container.

Such a configuration makes it possible to perform, using the single scraper, the operation of leveling the material off in the scoop and the operation of cutting part of the material in the scoop out to store the cut-out material in the subdivision container.

In one embodiment,
(8) The weight measurement apparatus according to (1) may further include a conveyance device configured to move the raw material container and the subdivision container, to position the raw material container or the subdivision container below the scraper.

Such a configuration makes it possible to perform, using the single scraper, the operation of leveling the material off in the scoop and the operation of cutting part of the material in the scoop out to store the cut-out material in the subdivision container.

In one embodiment,
(9) In the weight measurement apparatus according to any one of (1) to (8), powder may be stored as the material in the subdivision container.

Such a configuration makes it possible to weigh powder, as a target object, with high accuracy by the inexpensive configuration.

A method of controlling a weight measurement apparatus according to some embodiments is:
(10) A method of controlling a weight measurement apparatus for storing, in a subdivision container, material of a target weight from a raw material container, the weight measurement apparatus including:
a movable arm to which a scoop is attached;
a scraper;
a subdivision weight measurement instrument configured to measure the weight of material in the subdivision container; and
a controller,
the method including, by controlling the movable arm by the controller:
   scooping material up by the scoop from the raw material container;
   leveling the material off in the scoop using the scraper; and
   storing, in the subdivision container, the material in the scoop based on the weight of the material in the subdivision container measured by the subdivision weight measurement instrument.

As described above, the method of controlling the weight measurement apparatus scoops the material up by the scoop from the raw material container, levels the material off in the scoop using the scraper, and then stores, in the subdivision container, the material in the scoop based on the weight of the material in the subdivision container measured by the subdivision weight measurement instrument. Therefore, it is possible to weigh the material with high accuracy by the inexpensive configuration having the only one movable arm.

A program according to some embodiments is:
(11) A program configured to control operations of a weight measurement apparatus for storing, in a subdivision container, material of a target weight from a raw material container, the weight measurement apparatus including:
a movable arm to which a scoop is attached;
a scraper;
a subdivision weight measurement instrument configured to measure the weight of material in the subdivision container; and
a controller,
the operations including, by controlling the movable arm by the controller:
   scooping material up by the scoop from the raw material container;
   leveling the material off in the scoop using the scraper; and
   storing, in the subdivision container, the material in the scoop based on the weight of the material in the subdivision container measured by the subdivision weight measurement instrument.

As described above, the weight measurement apparatus that is operated based on the program scoops the material up by the scoop from the raw material container, levels the material off in the scoop using the scraper, and then stores, in the subdivision container, the material in the scoop based on the weight of the material in the subdivision container measured by the subdivision weight measurement instrument. Therefore, it is possible to weigh the material with high accuracy by the inexpensive configuration having the only one movable arm.

According to an embodiment of the present disclosure, it is possible to weigh powder with high accuracy by inexpensive configuration.

### BRIEF DESCRIPTION OF THE DRAWINGS

In the accompanying drawings:
FIG. 1 is a diagram illustrating a configuration example of a weight measurement apparatus according to an embodiment;
FIG. 2A is a flowchart illustrating an operation example of the weight measurement apparatus of FIG. 1;
FIG. 2B is a flowchart illustrating an operation example of the weight measurement apparatus of FIG. 1;
FIG. 3 is a diagram illustrating a configuration example of a weight measurement apparatus according to an embodiment; and
FIG. 4 is a diagram illustrating a configuration example of a weight measurement apparatus according to an embodiment.

### DETAILED DESCRIPTION

### <Comparative Example>

A first comparative example (Claims 1 and 8 of PTL 1) is:
"An automated register for granule that stores, from a granule container, a target amount of granules in a weighting container, the automated register for granule comprising:
a first robot arm;
a weighting scoop held at the tip of the first robot arm;
a second robot arm;
a sliding plate held at the tip of the second robot arm;
a first control means for controlling the first robot arm so that the weighting scoop takes out granules from the granule container; and
a second control means for controlling the second robot arm so that the granules on the weighting scoop are cut out at a predetermined position by the sliding plate and pushed to an opening end of the weighting scoop to be stored in the weighting container."

In the above automated register for granule,
"When a measurement value of a weight sensor is larger than the target amount, the second control means controls the second robot arm, so that the second robot arm replaces the sliding plate with an adjustment spoon and removes the granules from the weighting container by the adjustment spoon to make the measurement value of the weight sensor equal to the target amount."

The first comparative example uses a double-arm robot, which causes complicated configuration and high cost for an apparatus. In the first comparative example, when the weight of the granules in the weighting container is larger than the target amount, the sliding plate is replaced with the spoon and an excess amount is removed, which takes time for measurement.

A second comparative example (Claim 1 of PTL 2) is:
"A powder measuring apparatus that takes out a preset weight of powder from a powder container having an opening at an upper part, the powder measuring apparatus comprising:
an articulated-arm robot close to the powder container;
a shovel arranged at a tip of the articulated-arm robot;
a weight sensor for detecting the weight of powder scooped by the shovel;
a comparing means that makes a comparison between the weight of the powder that has already been measured with the shovel and the preset weight;
a shaker for vibrating the shovel at a predetermined position, based on the detection result of the weight sensor and the result of comparison by the comparing means; and
a driving and controlling means for controlling the driving of the articulated-arm robot, based on the detection result of the weight sensor and the result of comparison by the comparing means.

In the second comparative example, the shovel is vibrated to drop the powder into the container. Depending on the type of powder, some types of powder are difficult to drop by vibration. For example, granulated sugar, which has a low viscosity, is easily dropped by vibration, whereas wheat flour, which has a high viscosity, does not move by a little vibration. Therefore, in the second comparative example, the amount of powder dropped varies depending on the type of powder even with the same level of vibration, and it is difficult to fine-tune the amount of powder dropped, thus results in low measurement accuracy. In addition, the second comparative example takes time for measurement.

As described above, the comparative examples have room for improvement in terms of weighing powder with high accuracy and at high speed by inexpensive configuration.

### <Embodiments>

Hereinafter, embodiments of the present disclosure will be described with reference to the drawings. In each drawing, the same reference numeral refers to parts having the same structure or function. In the present embodiment, a duplicated description of the same part may be omitted or simplified as appropriate.

Weight measurement apparatuses 1 according to the present embodiments measure the weight of material P, which includes various types of powder having different characteristics such as particle sizes and viscosities, at high speed and with high accuracy, and subdivide the material P. The weight measurement apparatuses 1 can be used for weighting powder, e.g., sugar, salt, flour, flavor, or the like, in the food industry.

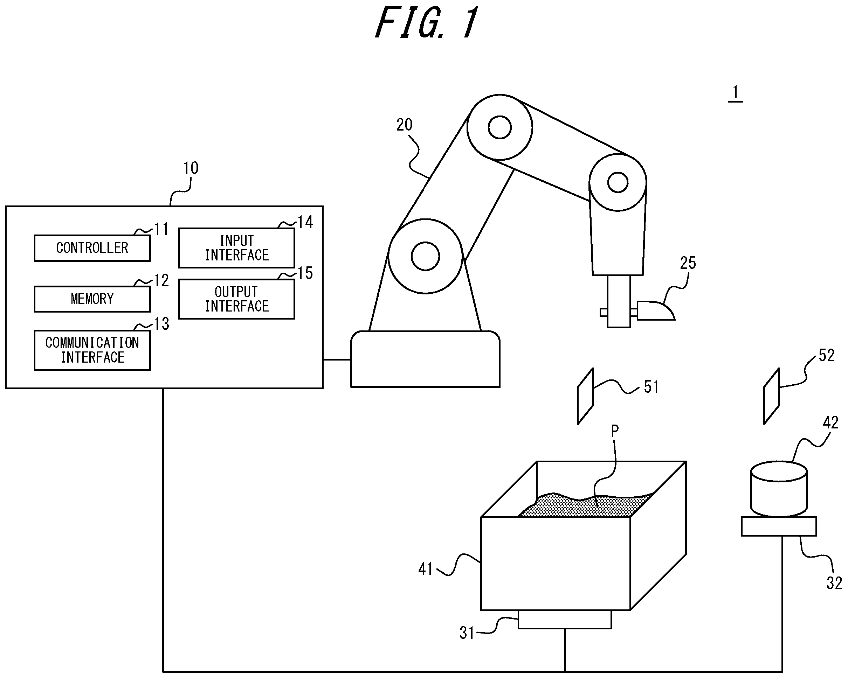

FIG. 1 is a diagram illustrating a configuration example of a weight measurement apparatus 1 according to an embodiment. The weight measurement apparatus 1 includes a control device 10, a movable arm 20, a scoop 25, weight measurement instruments 31 and 32, a raw material container 41, a subdivision container 42, and scrapers 51 and 52.

The control device 10 has centralized control of the operation of the weight measurement apparatus 1. Specifically, the control device 10 receives user operations to control the operation of the movable arm 20, or receives weight measurement values from the weight measurement instruments 31 and 32.

The control device 10 is one or multiple computer devices capable of communicating with each other. For example, the control device 10 may be any general purpose electronic instrument, such as a personal computer (PC) or a tablet terminal, or other dedicated electronic instrument. The control device 10 includes a controller 11, a memory 12, a communication interface 13, an input interface 14, and an output interface 15.

The controller 11 includes one or more processors. In this embodiment, the "processors" are general or dedicated processors, but are not limited thereto. The controller 11 is communicably connected to respective components constituting the control device 10, and controls the operation of the entire control device 10.

The memory 12 may include any memory module such as a solid state drive (SSD), read-only memory (ROM), or random access memory (RAM). The memory 12 stores any information used for the operation of the control device 10.

The communication interface 13 includes any communication module capable of communicating with other devices, such as the movable arm 20, by any communication technique. The communication interface 13 may further include a communication control module for controlling communication with other devices, a memory module for storing communication data, and the like.

The input interface 14 includes one or more input interfaces that accept user input operations and acquire input information based on the user input operations. For example, the input interface 14 is a physical key, a capacitive key, a pointing device, a touch screen integrally provided with a display of the output interface 15, or the like, but is not limited thereto.

The output interface 15 includes one or more output interfaces that output information to a user to notify the user of the information. For example, the output interface 15 is a display for outputting the information as images, or a speaker for outputting the information as audio, but is not limited thereto. At least one of the input interface 14 or the output interface 15 described above may be configured integrally with the control device 10, or may be provided separately.

The functions of the control device 10 can be realized by executing a computer program (program) according to this embodiment with a processor included in the controller 11. That is, the functions of the control device 10 may be implemented by software. The computer program causes the computer to execute the processing of steps included in the operation of the control device 10, thereby causing the computer to realize a function corresponding to the processing of each step. That is, the computer program is a program to make the computer function as the control device 10 according to this embodiment.

Part or all of the functions of the control device 10 may be realized by a dedicated circuit included in the controller 11. That is, part or all of the functions of the control device 10 may be implemented in hardware. The control device 10 may also be implemented by a single computer or by the cooperation of multiple computers.

The movable arm 20 is a robot with one multi-articulated arm. The movable arm 20 can change the angle between arm components connected each other, at each of multiple joints. The entire movable arm 20 may be rotatable by rotating a rotation portion provided at a lower part. The scoop 25 is attached at the tip of the movable arm 20. Operating the movable arm 20 can change the positional posture of the scoop 25.

The scoop 25, which is attached to the tip of the movable arm 20, scoops material P up and is loaded with the material P. The scoop 25 has a shape such that after the material P is scooped up, the amount of material P remaining after a scrape operation by the scraper 51 is constant. For example, the scoop 25 may have sidewalls opposite each other. The shape, material, and the like of the scoop 25 may be selected depending on the type of material P.

The weight measurement instruments 31 and 32 measure the weights of objects loaded. The weight measurement instrument 31, as a raw material weight measurement instrument, measures the weight of material P stored in the raw material container 41. The weight measurement instrument 32, as a subdivision weight measurement instrument, measures the weight of material P stored in the subdivision container 42. The weight measurement instrument 31 may be calibrated to subtract the weight of the empty raw material container 41, after measuring the total weight of the raw material container 41 in which the material P is stored. The weight measurement instrument 32 may be calibrated to subtract the weight of the empty subdivision container 42, after measuring the total weight of the subdivision container 42 in which the material P is stored. These calibrations may be performed in the weight measurement instruments 31 and 32, or in the control device 10.

The raw material container 41 stores the material P, which serves as raw material. In this embodiment, the material P is, for example, powder of sugar, salt, flour, flavor, or the like, but is not limited thereto. For example, the material P may be any solid, liquid, or the like, regardless of whether the material P is edible. Although the raw material container 41 is separately provided for each type of material P, a mixture of various types of powder having different characteristics such as particle sizes and viscosities may be stored as the material P.

The subdivision container 42 stores the material P that is subdivided by the scoop 25.

The scraper 51, as a first scraper, is used to level, in the scoop 25, the material P off immediately after being scooped up by the scoop 25. The scraper 51 may be wider in shape than the scoop 25. For example, the scraper 51 may be larger in shape than the space between the sidewalls of the scoop 25 opposite each other. In this embodiment, the scraper 51 is secured at a predetermined position above the raw material container 41.

The scraper 52, as a second scraper, is used to cut the material P loaded on the scoop 25 out, so that the cut-out material P is stored in the subdivision container 42. The scraper 52 may be in a shape fitting into the scoop 25. For example, the scraper 52 may be in a shape fitting into the sidewalls of the scoop 25 opposite each other. In this embodiment, the scraper 52 is secured at a predetermined position above the subdivision container 42.

In the configuration as described above, the weight measurement apparatus 1 realizes a low-cost weight measurement robot with the movable arm 20, which is a single arm robot, and the two scrapers 51 and 52. That is, even when the material P is powder, such as wheat flour, with a high viscosity, the weight measurement apparatus 1 can stabilize the amount of material P contained in the scoop 25 by leveling the mountain of material P, which is scooped up from the raw material container 41, off in the scoop 25 using the scraper 51. Therefore, when the amount of material P stored is finely adjusted by the scraper 52, the weight measurement apparatus 1 can easily cut a desired amount of material P out and transfer the desired amount of material P to the subdivision container 42 with high accuracy. The weight measurement apparatus 1 can prevent material P from falling during the conveyance of the material P from the raw material container 41 to the subdivision container 42, by leveling the mountain of material P off in the scoop 25 using the scraper 51. The weight measurement apparatus 1 can achieve weight measurement with high accuracy by cutting an appropriate amount of material P from the material P in the scoop 25 using the scraper 52 and repeating the fine adjustment of the amount of material P.

Specifically, the weight measurement apparatus 1 grasps the scoop 25 at the tip of the movable arm 20, and scoops up a constant amount of material P with the scoop 25 from the raw material container 41 for the material P. The weight measurement apparatus 1 conveys, to the subdivision container 42, the scoop 25 on which the material P is loaded, and stores the material P in the subdivision container 42. When the weight of material P stored in the subdivision container 42 does not reach a target value, the weight measurement apparatus 1 scoops material P up again from the raw material container 41 and adds the material P to the subdivision container 42. The weight measurement apparatus 1 repeats this procedure until the weight of stored material P reaches the target value.

Here, the weight measurement apparatus 1 measures the weight of the material P in the raw material container 41 by the weight measurement instrument 31. The weight measurement apparatus 1 grasps the weight of the material P in the raw material container 41 from a measurement value of the weight measurement instrument 31, and also calculates the weight of the material P scooped up by the scoop 25. The weight measurement apparatus 1 calculates the weight of the material P in the scoop 25 from the difference between weight measurement values measured by the weight measurement instrument 31 before and after scooping up the material P from the raw material container 41. The weight measurement apparatus 1 measures the weight of the material P stored in the subdivision container 42 by the weight measurement instrument 32.

When material P is conveyed from the raw material container 41 over the subdivision container 42, the weight measurement apparatus 1 performs, before the conveyance, the scrape operation in which the mountain of the material P is leveled off to a certain extent using the scraper 51, in order to prevent the material P from falling from the scoop 25. The scraped material P falls into the raw material container 41 and is stored as is.

The scrape operation is performed by moving the scoop 25 attached to the movable arm 20 back and forth with respect to the front of the scraper 51. Here, the weight measurement apparatus 1 moves the scoop 25 back and forth by appropriately adjusting the position of the scoop 25 on which the material P is loaded, according to the position of the scraper 51. After the scrape operation, the weight measurement apparatus 1 conveys the scoop 25 over the subdivision container 42.

After the conveyance, the weight measurement apparatus 1 throws the entire amount of the material P in the scoop 25 into the subdivision container 42. Specifically, the weight measurement apparatus 1 tilts the scoop 25 by moving the movable arm 20, to drop the material P into the subdivision container 42.

Here, when storing, in the subdivision container 42, the entire amount of the material P in the scoop 25 exceeds the target weight value, the weight measurement apparatus 1 stores, in the subdivision container 42, part of the material P in the scoop 25. When part of the material P in the scoop 25 is thrown into the subdivision container 42, the weight measurement apparatus 1 uses the scraper 52 provided above the subdivision container 42. That is, the weight measurement apparatus 1 inserts the scraper 52 into the material P in the scoop 25 using the movable arm 20, and cuts the material P out of the scoop 25 to drop and store the cut-out material P in the subdivision container 42.

As described above, the control of the movable arm 20 and the calculation of the weight are performed based on the control of the control device 10.

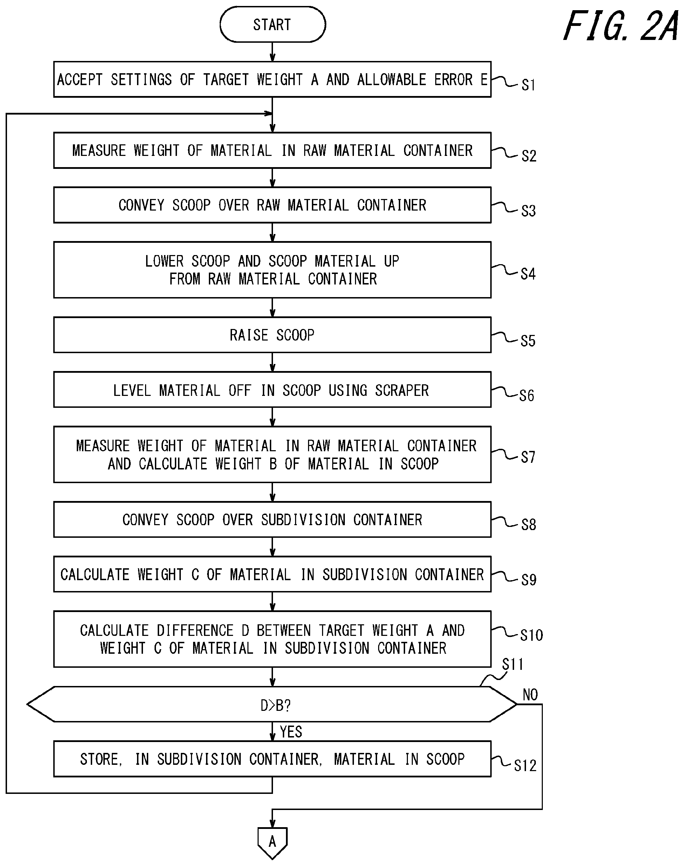

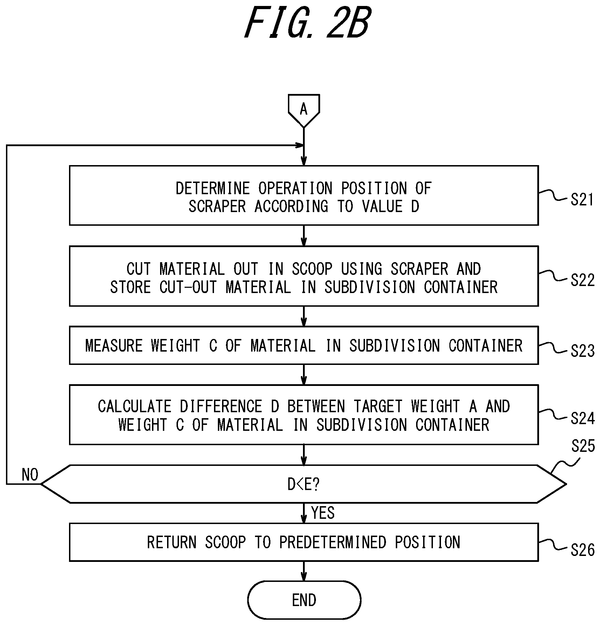

The operation of storing a desired target weight A of material P from the raw material container 41 to the subdivision container 42 will be described with reference to FIGS. 2A and 2B. FIGS. 2A and FIG. 2B are flowcharts illustrating an operation example of the weight measurement apparatus 1 in FIG. 1. The operation of the weight measurement apparatus 1 described with reference to FIGS. 2A and 2B may correspond to one of control methods of the weight measurement apparatus 1. The operation of each step of FIGS. 2A and 2B may be executed based on the control of the controller 11 of the control device 10.

In step S1 of FIG. 2A, the controller 11 accepts, from a user, settings of a target weight A and an allowable error E. The target weight A is a target value on the weight of material P to be stored in the subdivision container 42. The allowable error E is a value indicating an allowable range of the difference D between the weight of the material P to be stored in the subdivision container 42 and the target weight A.

In step S2, the controller 11 measures the weight of material P in the raw material container 41 by the weight measurement instrument 31. The controller 11 stores, in the memory 12, a measurement value of the weight of the material P in the raw material container 41.

In step S3, the controller 11 conveys the scoop 25 over the raw material container 41, by controlling the movable arm 20.

In step S4, the controller 11 lowers the scoop 25 to a predetermined height and scoops material P up from the raw material container 41, by controlling the movable arm 20. Here, the material P is in a mountain shape in the scoop 25.

In step S5, the controller 11 raises the scoop 25 to a predetermined height at which the scraper 51 is provided, by controlling the movable arm 20.

In step S6, the controller 11 levels the material P, which is in a mountain shape, off in the scoop 25 using the scraper 51. Thus, the scraped material P falls into the raw material container 41.

In step S7, the controller 11 measures the weight of material P in the raw material container 41 by the weight measurement instrument 31, and calculates the weight B of material P in the scoop 25. Specifically, the controller 11 calculates the weight B of the material P in the scoop 25 from the difference between the weight of the material P measured by the weight measurement instrument 31 and the weight of the material P measured in step S2. The controller 11 stores, in the memory 12, a measurement value of the weight B of the material P in the scoop 25.

In step S8, the controller 11 conveys the scoop 25 over the subdivision container 42, by controlling the movable arm 20.

In step S9, the controller 11 measures the weight C of material P in the subdivision container 42 by the weight measurement instrument 32. The controller 11 stores, in the memory 12, a measurement value of the weight C of the material P in the subdivision container 42.

In step S10, the controller 11 calculates the difference D (=A-C) between the target weight A, whose input is accepted in step S1, and the weight C of the material P in the subdivision container 42, which is measured in step S9. The controller 11 stores the calculated difference D in the memory 12.

In step S11, the controller 11 determines whether the difference D calculated in step S10 is larger than the weight B. When the difference D is larger than the weight B (YES in step S11), the controller 11 proceeds to step S12, otherwise (NO in the step S11), the controller 11 proceeds to step S21 of FIG. 2B. In other words, the controller 11 proceeds to step S12 when the target weight A is not exceeded even if entire one level scoop of material P is stored in the subdivision container 42, or proceeds to step S21 of FIG. 2B when the target weight A is exceeded.

In step S12, the controller 11 stores, in the subdivision container 42, the entire material P in the scoop 25, by controlling the movable arm 20. When the weight C of the material P in the subdivision container 42 is less than the target weight A even if the entire material P in the scoop 25 is stored in the subdivision container 42, the controller 11 drops the entire amount of the material P in the scoop 25 and stores the material P in the subdivision container 42. When the entire amount of the material P in the scoop 25 is dropped into the subdivision container 42, the controller 11 may tilt the scoop 25 toward the subdivision container 42 without using the scraper 52.

When the processing of step S12 is completed, the controller 11 returns to step S2. In this manner, the weight measurement apparatus 1 repeats the operation of storing material P in the subdivision container 42 by one level scoop 25 of material P, within a range not exceeding the target weight A.

In step S21 and later of FIG. 2B, the weight measurement apparatus 1 performs the operation of storing less than one level scoop 25 of material P in the subdivision container 42 using the scraper 52. Specifically, the weight measurement apparatus 1 inserts the scraper 52 into the material P in the scoop 25, and cuts the material P out of the scoop 25 to drop and store the cut-out material P in the subdivision container 42.

In step S21, the controller 11 determines an operation position of the scraper 52, according to the value of the difference D calculated in step S10. Specifically, for example, the correspondence relationship between the weight of material P to be dropped from the scoop 25 to the subdivision container 42 and the operation position of the scraper 52 is stored in advance in the memory 12. The controller 11 may determine the operation position of the scraper 52 based on the correspondence relationship. Alternatively, for example, the weight measurement apparatus 1 may store information, such as the density and weight of material P and the capacity and shape of the scoop 25, in advance in the memory 12. The controller 11 may calculate how many grams of material P is to be dropped into the subdivision container 42 by cutting how many centimeters of the material P out, based on the above information, and determine and adjust the operation position of the scraper 52 in more detail.

In step S22, the controller 11 cuts the material P out in the scoop 25 using the scraper 52, by controlling the movable arm 20, to drop and store the cut-out material P in the subdivision container 42.

In step S23, the controller 11 measures the weight C of material P in the subdivision container 42 by the weight measurement instrument 32. The controller 11 stores, in the memory 12, a measurement value of the weight C of the material P in the subdivision container 42.

In step S24, the controller 11 calculates the difference D (=A-C) between the target weight A, whose input is accepted in step S1, and the weight C of the material P in the subdivision container 42, which is measured is step S23. The controller 11 stores the calculated difference D in the memory 12.

In step S25, the controller 11 determines whether the difference D calculated in step S24 is smaller than the allowable error E. When the difference D is smaller than the allowable error E (YES in step S25), the controller 11 proceeds to step S26, otherwise (NO in step S25) the controller 11 returns to step S21. In this manner, the controller 11 determines the operation position of the scraper 52 according to the magnitude of the difference between the actual weight C of the material P in the subdivision container 42 and the target weight A, and repeats the operation of cutting the material P in the scoop 25 out using the scraper 52 and storing the cut-out material P in the subdivision container 42.

In step S26, the controller 11 returns the scoop 25 to a predetermined position by controlling the movable arm 20. When the operation of step S26 is finished, the controller 11 terminates the processing of the flowcharts.

As described above, the weight measurement apparatus 1 adjusts the cut-out position so that the weight of the material P to be subdivided does not exceed a target value and optimizes the cut-out amount, which eliminates a return operation of the material P, which is performed when the weight is exceeded. Therefore, the weight measurement apparatus 1 can speed up weight measurement.

The weight measurement apparatus 1 levels the mountain of the material P off in the scoop 25 using the scraper 51. Therefore, the weight measurement apparatus 1 can prevent the material P from falling during conveyance, and prevent the material P from being wasted. The weight measurement apparatus 1 can cut out and store the material P little by little using the scraper 52, thereby increasing measurement accuracy.

The weight measurement apparatus 1 adjusts the cut-out position of the scraper 52 according to the magnitude of the difference relative to the target weight value, and cuts the material P in the scoop 25 out. The weight measurement apparatus 1 determines the cut-out position so as not to exceed the target value. Therefore, the weight measurement apparatus 1 can eliminate a return process of the material P, which is performed when the weight is exceeded, thereby speeding up weight measurement.

Note that, the distribution of the height of the material P remaining in the raw material container 41 may be acquired, and the position at which the material P is scooped up by the scoop 25 may be determined in the raw material container 41 based on the acquired distribution of the height of the material P. Specifically, the weight measurement apparatus 1 may image the material P in the raw material container 41 with multiple cameras, and perform image analysis to calculate the distribution of the height of the material P remaining. The weight measurement apparatus 1 may scoop the material P up from the raw material container 41 in descending order of the height. According to such a configuration, it is possible to uniformly scoop the material P up from the raw material container 41, and to prevent the operation of scooping the material P up by positioning the scoop 25 to a place at which no material P is present.

As described above, the weight measurement apparatus 1 calculates the cut-out position of the scraper 52 to adjust the amount of the material P to be scraped in the scoop 25, according to the magnitude of the difference of the weight of the material P in the scoop 25 relative to the target value of the weight of the material P to be subdivided. The weight measurement apparatus 1 determines the position of scraping the material P to be stored, so as not to exceed the target value. Therefore, the weight measurement apparatus 1 can weigh the material P with high accuracy and at high speed.

The weight measurement apparatus 1 may calculate the distribution of the height of the remaining material P from images by, for example, imaging the material P in the raw material container 41 with the multiple cameras, and scoop the material P up from the raw material container 41 in descending order of the height, in the material P measurement robot. Therefore, the weight measurement apparatus 1 can uniformly scoop the material P up from the raw material container 41. Note that, the weight measurement apparatus 1 can calculate the distribution of the height of the remaining material P with the simple configuration using the captured images of the multiple cameras, without affecting surrounding environment, but the configuration for acquiring the distribution of the height of the remaining material P is not limited to the cameras. For example, the weight measurement apparatus 1 may acquire the distribution of the height of the material P remaining in the raw material container 41 using a laser.

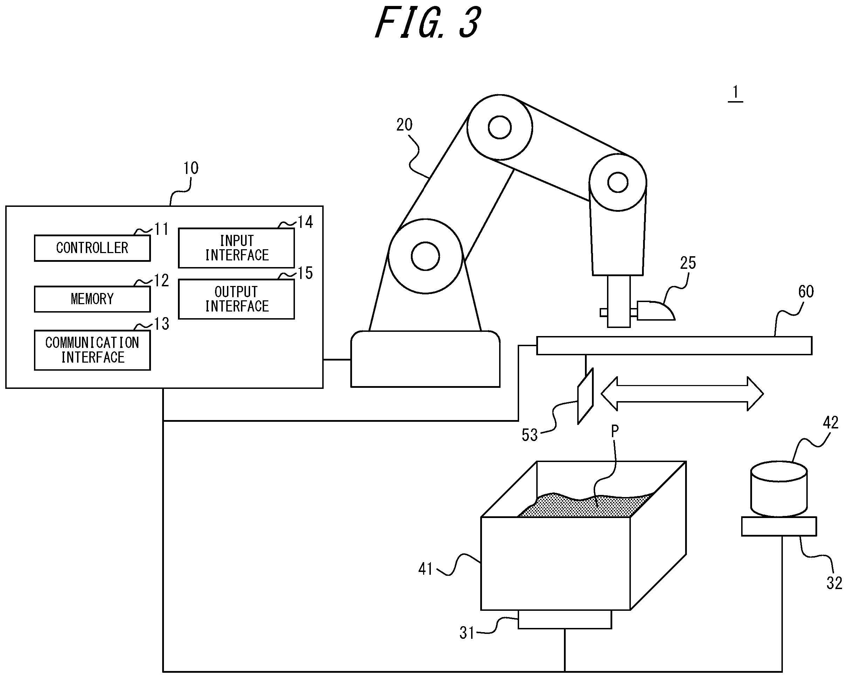

Note that, the weight measurement apparatus 1 of FIG. 1 includes the multiple scrapers 51 and 52, but the number of scrapers may be one. FIG. 3 is a diagram illustrating a configuration example of a weight measurement apparatus 1 according to an embodiment. The weight measurement apparatus 1 of FIG. 3 includes one scraper 53, and a movement device 60 that moves the scraper 53 between above the raw material container 41 and above the subdivision container 42. According to such a configuration, it is possible to perform, using the single scraper 53, the operation of leveling material P off in the scoop 25 and the operation of cutting part of material P in the scoop 25 out to store the cut-out material P in the subdivision container 42.

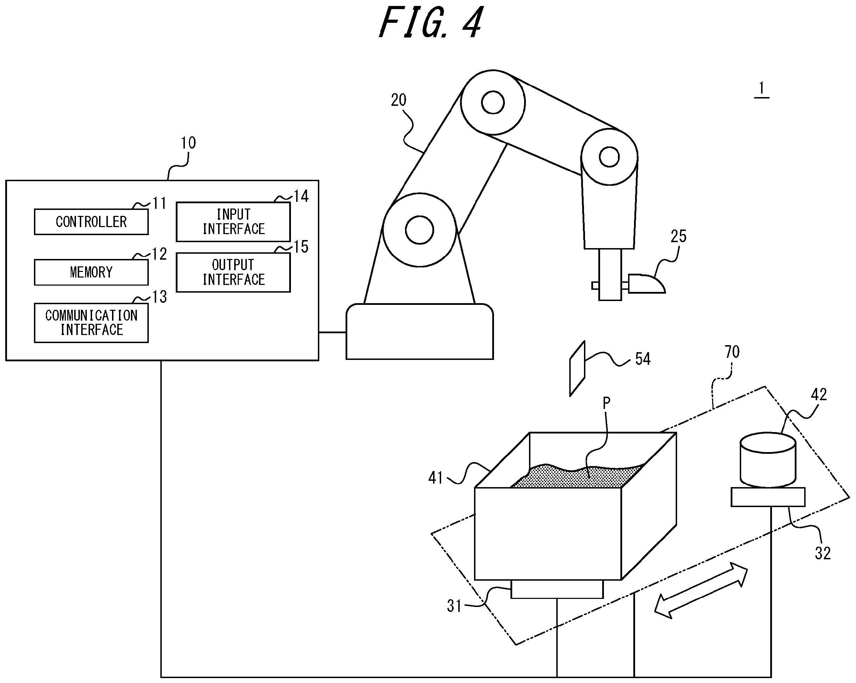

FIG. 4 is a diagram illustrating a configuration example of a weight measurement apparatus 1 according to an embodiment. The weight measurement apparatus 1 of FIG. 4 further includes one scraper 54, and a conveyance device (belt conveyor or the like) 70 that moves the raw material container 41 and the subdivision container 42 to position the raw material container 41 or the subdivision container 42 below the scraper 54. According to such a configuration, it is possible to perform, using the single scraper 54, the operation of leveling material P off in the scoop 25 and the operation of cutting part of material P in the scoop 25 out to store the cut-out material P in the subdivision container 42.

The present disclosure is not limited to the above-described embodiments. For example, the multiple blocks illustrated in the block diagrams may be integrated, or the single block may be divided. The multiple steps illustrated in the flowcharts may be performed in parallel or in a different order, depending on the capacity of the device performing each step or as needed, instead of being performed in a time series according to the description. Other modifications may be made within confines not departing from the gist of the present disclosure.

## Claims

1. A weight measurement apparatus for storing, in a subdivision container, material of a target weight from a raw material container, the weight measurement apparatus comprising:
a movable arm to which a scoop is attached;
a scraper;
a subdivision weight measurement instrument configured to measure a weight of material in the subdivision container; and
a controller,
wherein the controller is configured to, by controlling the movable arm:
scoop material up by the scoop from the raw material container;
level the material off in the scoop using the scraper; and
store, in the subdivision container, the material in the scoop based on the weight of the material in the subdivision container measured by the subdivision weight measurement instrument.

2. The weight measurement apparatus according to claim 1, comprising, as the scraper, a first scraper provided above the raw material container, and a second scraper provided above the subdivision container,
wherein the controller is configured to, by controlling the movable arm:
using the first scraper, level the material off in the scoop that has scooped the material up from the raw material container, and
using the second scraper, store, in the subdivision container, the material in the scoop based on the weight of the material in the subdivision container measured by the subdivision weight measurement instrument.

3. The weight measurement apparatus according to claim 2, wherein the first scraper is wider in shape than the scoop.

4. The weight measurement apparatus according to claim 2 or 3, wherein the second scraper is in a shape fitting into the scoop.

5. The weight measurement apparatus according to any one of claims 1 to 4, further comprising a raw material weight measurement instrument configured to measure a weight of material in the raw material container,
wherein the controller is configured to, by controlling the movable arm:
calculate a weight of the material in the scoop, based on the weight of the material in the raw material container measured by the raw material weight measurement instrument before and after scooping the material up by the scoop from the raw material container; and
store, in the subdivision container, the material in the scoop based on the calculated weight of the material in the scoop.

6. The weight measurement apparatus according to any one of claims 1 to 5, wherein the controller is configured to:
acquire a distribution of a height of material remaining in the raw material container; and
determine, based on the acquired distribution of the height of the material, a position at which the material is scooped up by the scoop, in the raw material container.

7. The weight measurement apparatus according to claim 1, further comprising a movement device configured to move the scraper between above the raw material container and above the subdivision container.

8. The weight measurement apparatus according to claim 1, further comprising a conveyance device configured to move the raw material container and the subdivision container, to position the raw material container or the subdivision container below the scraper.

9. The weight measurement apparatus according to any one of claims 1 to 8, wherein powder is stored as the material in the subdivision container.

10. A method of controlling a weight measurement apparatus for storing, in a subdivision container, material of a target weight from a raw material container, the weight measurement apparatus including:
a movable arm to which a scoop is attached;
a scraper;
a subdivision weight measurement instrument configured to measure a weight of material in the subdivision container; and
a controller,
the method comprising, by controlling the movable arm by the controller:
scooping material up by the scoop from the raw material container;
leveling the material off in the scoop using the scraper; and
storing, in the subdivision container, the material in the scoop based on the weight of the material in the subdivision container measured by the subdivision weight measurement instrument.

11. A program configured to control operations of a weight measurement apparatus for storing, in a subdivision container, material of a target weight from a raw material container, the weight measurement apparatus including:
a movable arm to which a scoop is attached;
a scraper;
a subdivision weight measurement instrument configured to measure a weight of material in the subdivision container; and
a controller,
the operations comprising, by controlling the movable arm by the controller:
scooping material up by the scoop from the raw material container;
leveling the material off in the scoop using the scraper; and
storing, in the subdivision container, the material in the scoop based on the weight of the material in the subdivision container measured by the subdivision weight measurement instrument.
